## Europäisches Patentamt
## European Patent Office
## Office européen des brevets

(19)

(11) Numéro de publication: **0 227 511**
**B1**

(12) **FASCICULE DE BREVET EUROPEEN**

(45) Date de publication du fascicule du brevet:
24.05.89

(51) Int. Cl.⁴: **F 16 B 5/02,** F 16 B 5/06,
B 25 B 21/00

(21) Numéro de dépôt: 86402492.2

(22) Date de dépôt: 07.11.86

(54) **Dispositif de serrage d'au moins deux pièces accolées à assembler, et ensemble de serrage comprenant un outil de serrage et ledit dispositif de serrage.**

(30) Priorité: 19.11.85 FR 8517088
31.10.86 FR 8615220

(43) Date de publication de la demande:
01.07.87 Bulletin 87/27

(45) Mention de la délivrance du brevet:
24.05.89 Bulletin 89/21

(84) Etats contractants désignés:
BE DE ES GB IT NL SE

(56) Documents cités:
**US-A- 1 785 709**
**US-A- 3 747 168**
**US-A- 4 472 985**

(73) Titulaire: **AEROSPATIALE SOCIETE NATIONALE INDUSTRIELLE Société Anonyme dite:, 37, Boulevard de Montmorency, F-75016 Paris (FR)**

(72) Inventeur: **Cortey, Michel, 71, Route de la Chapelle sur Erdre, F-44300 Nantes (FR)**
Inventeur: **Durand, Jean-Yves, 7, rue des Cèdres, F-44230 St. Sebastien Sur Loire (FR)**

(74) Mandataire: **Bonnetat, Christian et al, Cabinet PROPI Conseils 23 rue de Léningrad, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un dispositif de serrage d'au moins deux pièces accolées à assembler, destiné à être introduit dans au moins deux alésages alignés l'un par rapport à l'autre prévus, respectivement, dans lesdites pièces, ainsi qu'un ensemble de serrage comprenant un outil de serrage et ledit dispositif de serrage.

Le brevet US-A-3 747 168 décrit déjà un dispositif de serrage pour cet usage comprenant:

— une tête susceptible de venir en appui sur une face d'une pièce et qui est munie d'un perçage dont l'axe longitudinal est décalé par rapport à l'axe longitudinal de la tête,

— le perçage étant susceptible de recevoir de façon coulissante une tige, filetée au moins à sa partie d'extrémité voisine de la tête, et dont l'autre extrémité comporte un ergot, et

— un écrou destiné à coopérer avec la partie filetée de la tige de sorte que, après introduction du dispositif de serrage dans les alésages, introduction pendant laquelle l'ergot est en position d'alignement par rapport aux alésages, et après rotation de la tige, et par conséquent de l'ergot, jusqu'à une position de saillie de ce dernier par rapport aux alésages, la rotation de l'écrou permet de serrer les pièces à assembler entre la tête et l'ergot.

L'inconvénient principal du dispositif décrit dans le brevet cité ci-dessus réside en ce que, dans ce cas, il n'est pas possible d'utiliser des moyens automatiques pour le verrouillage du dispositif contre les pièces à assembler. En effet, d'une part, une fois que l'ergot se trouve dans ladite position de saillie, la translation axiale de la tige, permettant de verrouiller le dispositif, ne peut être obtenue qu'en bloquant manuellement en rotation cette dernière. D'autre part, l'opérateur doit, à chaque fois, empêcher la tête de tourner grâce à une broche traversant celle-ci et s'engageant dans un trou borgne correspondant prévu dans une des pièces à assembler.

Il apparaît ainsi que l'utilisation du dispositif de serrage décrit dans le brevet US-A-3 747 168 nécessite de nombreuses opérations manuelles, ce qui, en pratique, interdit, ou tout au moins limite fortement, l'emploi, sur une grande échelle, d'un tel dispositif.

La présente invention a donc pour objet d'éviter cet inconvénient en procurant un dispositif de serrage conçu de façon telle qu'il soit possible d'automatiser le processus de verrouillage et/ou de serrage de celui-ci. A cet effet, le dispositif de serrage, du type décrit ci-dessus, est notamment remarquable, selon l'invention, en ce qu'il comprend des moyens de blocage comportant un premier élément solidaire de la tête et un second élément solidaire en rotation de la tige et susceptible d'être entraîné en rotation par l'écrou en même temps que la tige entre ladite position d'alignement et ladite position de saillie, position de saillie dans laquelle lesdits premier et second éléments de blocage coopèrent pour bloquer la rotation de la tige, de sorte que toute rotation supplémentaire de même sens de l'écrou entraîne une translation axiale de la tige dans le sens du serrage des pièces.

Ainsi, après introduction du dispositif dans les alésages des pièces, un seul et même mouvement de rotation de l'écrou permet, tout d'abord, une rotation de la tige filetée jusqu'à la position de saillie de l'ergot, puis, une fois atteinte cette position de saillie, une translation axiale de la tige permettant le serrage des pièces. Grâce à l'invention, l'utilisation d'un outil rotatif, automatique, de serrage devient possible, et le dispositif de serrage peut être employé sur une échelle industrielle.

Selon une autre caractéristique de l'invention, le second élément de blocage comprend une came, de forme générale circulaire, logée dans un évidement prévu dans ladite tête, et munie d'une fenêtre arquée dans laquelle est introduite une butée constituant le premier élément de blocage, la came étant percée d'un trou pour l'introduction de la tige filetée, la section de la tige et celle dudit trou étant adaptées de telle sorte que toute rotation de la tige entraîne une rotation concomitante de la came.

En particulier, la tige et le trou de came peuvent présenter des sections oblongues correspondantes, et la fenêtre de came peut s'étendre à la périphérie de celle-ci sur environ la moitié de sa circonférence.

Selon un mode de réalisation de l'invention, le dispositif de serrage comporte de plus un corps de guidage dans lesdits alésages, solidaire de ladite tête et muni d'un perçage, en alignement avec le perçage de la tête, pour recevoir de façon coulissante ladite tige.

On peut également prévoir, dans ce cas, des moyens de rappel entre l'ergot et la base du corps, à l'encontre desquels s'effectue la translation axiale de la tige.

Une autre possibilité consiste à prévoir un corps de guidage supplémentaire monté sur ladite tige au voisinage de l'ergot, des moyens de rappel étant alors prévus entre ledit corps de guidage et ledit corps de guidage supplémentaire.

Dans ce cas, selon une autre caractéristique de l'invention, le dispositif comprend des moyens pour guider le corps de guidage et le corps de guidage supplémentaire dans leurs déplacements relatifs parallèlement à leur axe commun et empêcher tout déplacement relatif desdits corps autour dudit axe.

Ainsi, grâce auxdits moyens de guidage, il est assuré que le corps de guidage et le corps de guidage supplémentaire resteront constamment alignés l'un par rapport à l'autre, notamment pendant la phase de serrage du dispositif de l'invention, ce qui est avantageux dans certains cas d'application du dispositif de serrage.

En particulier, lesdits moyens de guidage comprennent un premier élément d'indexage sur le corps de guidage, respectivement sur le corps de guidage supplémentaire, et un second élément d'indexage sur le corps de guidage supplémentaire, respectivement sur le corps de guidage, lesdits premier et second éléments d'indexage étant susceptibles de coopérer pour maintenir alignés, l'un par rapport à l'autre, le corps de guidage et le corps de guidage supplémentaire.

Avantageusement, le premier élément d'indexage est un méplat prévu sur le corps de guidage, respectivement sur le corps de guidage supplémentaire, et le second élément d'indexage est une saillie, dont la forme correspond à celle dudit méplat, sur le corps de guidage supplémentaire, respectivement sur le corps de guidage.

Selon une autre caractéristique de l'invention, ledit corps de guidage est cylindrique de section circulaire, et l'ergot se présente sous la forme d'un disque solidaire de la tige, de diamètre au moins sensiblement égal au diamètre du corps et dont l'axe central est décalé par rapport à l'axe de la tige d'une valeur au moins sensiblement égale au décalage entre l'axe longitudinal de la tête et celui de son perçage.

En outre, selon un autre mode de réalisation de l'invention, la tête du dispositif de serrage est pourvue d'un évidement central dans lequel sont logés des moyens de rappel, à l'encontre desquels s'effectue la translation axiale de la tige. Plus précisément, lesdits moyens de rappel peuvent être prévus entre le fond dudit évidement et un corps de guidage entourant la tige au voisinage de l'ergot et pouvant coulisser dans l'évidement.

Comme on l'a vu précédemment, l'invention permet l'utilisation d'un outil de serrage automatique susceptible de coopérer avec un dispositif de serrage pour le verrouiller.

Pour rendre encore plus simple l'emploi du dispositif de serrage, l'invention concerne de plus un ensemble de serrage comportant un outil de serrage, et au moins un dispositif de serrage d'au moins deux pièces accolées à assembler, destiné à être introduit dans au moins deux alésages alignés l'un par rapport à l'autre prévus, respectivement, dans lesdites pièces, le dispositif de serrage comprenant:

— une tête susceptible de venir en appui sur une face d'une pièce et qui est munie d'un perçage dont l'axe longitudinal est décalé par rapport à l'axe longitudinal de la tête,

— le perçage étant susceptible de recevoir de façon coulissante une tige, filetée au moins à sa partie d'extrémité voisine de la tête, et dont l'autre extrémité comporte un ergot, et

— un écrou destiné à coopérer avec la partie filetée de la tige de sorte que, après introduction du dispositif de serrage dans les alésages, introduction pendant laquelle l'ergot est en position d'alignement par rapport aux alésages, et après rotation de la tige, et par conséquent de l'ergot, jusqu'à une position de saillie de ce dernier par rapport aux alésages, la rotation de l'écrou permet de serrer les pièces à assembler entre la tête et l'ergot, et l'outil de serrage comprenant:

— une tête présentant une douille susceptible de coopérer avec ledit écrou, et

— des moyens d'entraînement en rotation de la douille, l'ensemble étant notamment remarquable en ce que la tête de l'outil et la tête du dispositif de serrage comportent, respectivement, des premier et second moyens susceptibles de coopérer l'un avec l'autre de telle sorte que l'engagement de la tête du dispositif de serrage avec la tête de l'outil garantit le blocage en rotation de la tête du dispositif de serrage.

En particulier, la tête de l'outil présente un évidement pour la réception d'au moins une partie, de forme correspondante, de la tête du dispositif de serrage.

Enfin, selon encore une autre caractéristique de l'invention, ledit évidement et ladite partie de la tête du dispositif de serrage présentent des formes cylindriques de section circulaire complémentaires, et lesdits premier et second moyens comportent, respectivement, au moins une saillie prévue sur la surface latérale interne de la tête de l'outil, respectivement sur la surface latérale externe de la tête du dispositif de serrage, susceptible de coopérer avec une échancrure prévue dans la tête du dispositif de serrage, respectivement dans la tête de l'outil.

Les figures des dessins annexés feront bien comprendre comment l'invention peut être réalisée. Sur ces figures, des références identiques désignent des éléments identiques ou semblables.

La figure 1 est une vue schématique en perspective d'un mode de réalisation du dispositif de serrage de l'invention avant l'introduction dans les alésages alignés de trois pièces accolées à assembler.

La figure 2 est une vue en perspective éclatée du dispositif de serrage de la figure 1.

La figure 3 est une vue de dessus d'une came de blocage d'un dispositif de serrage de l'invention.

La figure 4 est une vue schématique en coupe axiale du corps et de la tête du dispositif de serrage de l'invention.

Les figures 5A et 5B sont des vues schématiques d'un mode de réalisation modifié du dispositif de serrage de la figure 1, respectivement, en position de saillie de l'ergot et en position de verrouillage.

La figure 6 est une vue schématique en perspective du dispositif de serrage des figures 5A et 5B modifié selon une variante de l'invention.

La figure 7 est une vue en perspective éclatée du dispositif de serrage de la figure 6.

Les figures 8A et 8B sont des vues schématiques du dispositif de serrage de la figure 6 introduit dans les alésages alignés de deux pièces accolées à assembler, respectivement en position d'alignement de l'ergot et en position de verrouillage.

La figure 9 est une vue schématique en coupe axiale d'un autre mode de réalisation du dispositif de serrage de l'invention.

Les figures 10A, 11A et 12A sont des vues schématiques du dispositif de serrage de l'invention, respectivement, en position d'introduction dans les alésages des pièces, en position de saillie de l'ergot et en position de verrouillage.

Les figures 10B, 11B et 12B sont des vues de dessus des figures 10A, 11A et 12A, respectivement.

Les figures 10C, 11C et 12C sont des vues de dessous simplifiées des figures 10A, 11A et 12A, respectivement.

La figure 13 est une vue schématique de l'outil de serrage de l'invention.

La figure 14 est une vue schématique en perspective de la tête de l'outil de serrage de la figure 13.

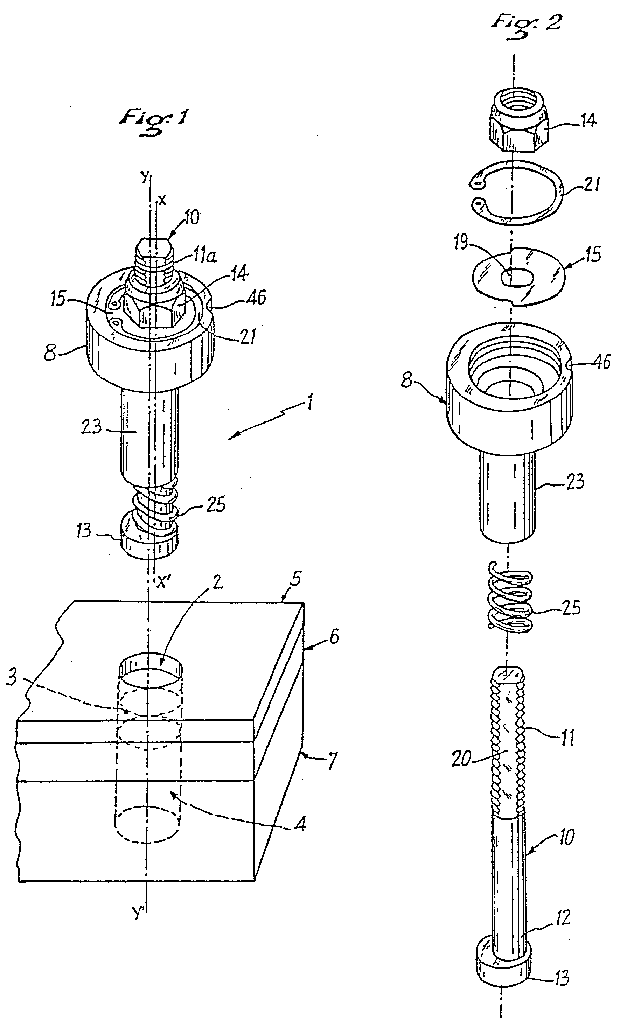

En se référant en particulier à la figure 1, le dispositif de serrage 1 selon l'invention est destiné à être introduit dans les alésages 2, 3, 4 alignés l'un par rapport à l'autre prévus, respectivement, dans un certain nombre de pièces 5, 6, 7 accolées à assembler. A titre d'exemple, trois pièces, en forme de plaque, accolées l'une à l'autre sont représentées sur la figure 1.

Le dispositif de serrage 1 comprend une tête 8 susceptible de venir en appui sur une face d'une pièce (la pièce supérieure 5 dans l'exemple représenté sur la figure 1) et qui est munie d'un perçage 9 dont l'axe longitudinal X-X' est décalé par rapport à l'axe longitudinal Y-Y' de la tête 8.

Le perçage 9 est susceptible de recevoir de façon coulissante une tige 10, filetée au moins à sa partie d'extrémité 11 voisine de la tête 8, et dont l'autre extrémité 12 comporte un ergot 13.

Le dispositif de serrage 1 comprend de plus un écrou 14 destiné à coopérer avec la partie filetée 11 de la tige 10 (un jonc de sûreté 11a étant prévu à cette extrémité 11 pour empêcher l'écrou 14 de s'échapper), ainsi qu'une came 15, de forme générale circulaire, logée dans un évidement 16 prévu dans la tête 8, et munie d'une fenêtre périphérique arquée 17 s'étendant, par exemple, sur environ la moitié de sa circonférence.

La came 15 est susceptible de coopérer avec une butée 18 solidaire de la tête 8, en particulier de la périphérie de l'évidement 16, et pouvant être introduite dans la fenêtre arquée 17 de la came 15.

La came 15 est, en outre, munie d'un trou 19 pour l'introduction de la partie filetée 11 de la tige 10, la tige 10 et le trou de came 19 présentant des sections oblongues correspondantes. En particulier, la partie filetée 11 de la tige 10 présente deux méplats diamétralement opposés, un seul méplat 20 étant visible sur la figure 2. La came 15 est maintenue dans l'évidement 16 à l'aide d'un anneau élastique 21 logé dans une gorge 22 de la tête 8.

Dans le mode de réalisation du dispositif de serrage illustré par les figures 1 et 2, celui-ci comporte de plus un corps 23 de guidage dans les alésages des pièces à assembler. Le corps 23 est solidaire de la tête 8 et est muni d'un perçage 24, en alignement avec le perçage 9 de la tête 8, pour recevoir de façon coulissante la tige 10. On prévoit, en outre, des moyens de rappel, tels qu'un ressort hélicoïdal 25, entre l'ergot 13 et la base du corps 23.

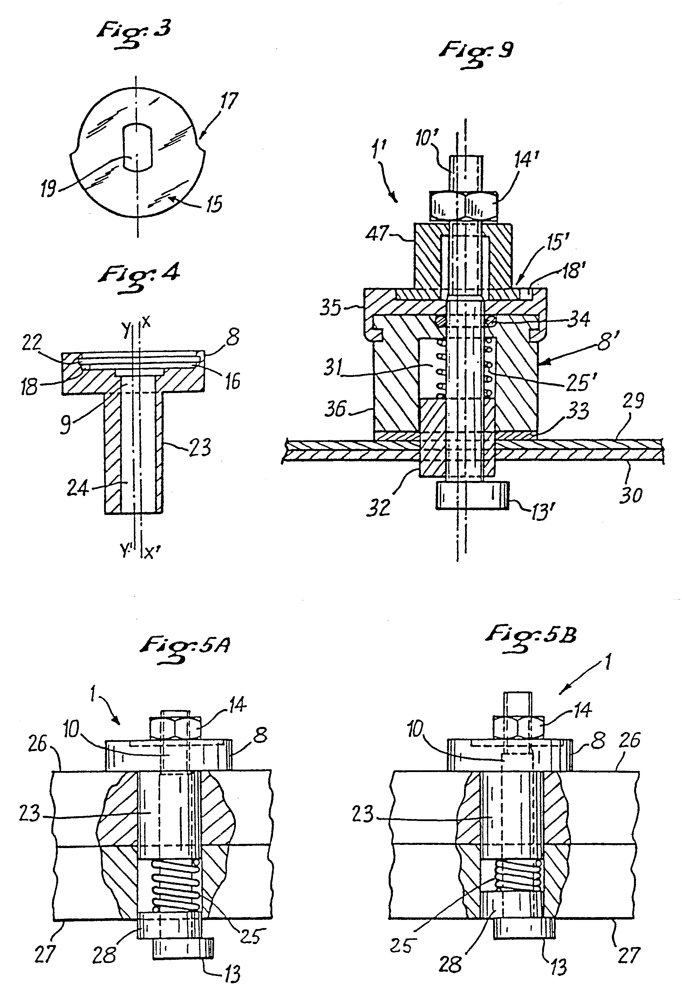

En se référant aux figures 5A et 5B, le dispositif de serrage 1 de l'invention est, dans cet exemple, adapté pour serrer deux pièces 26, 27 accolées l'une à l'autre. Le mode de réalisation du dispositif de serrage 1 illustré par ces figures est modifié, par rapport au mode de réalisation illustré par les figures 1 à 4, par l'adjonction d'un corps de guidage supplémentaire 28 monté sur la tige 10 au voisinage de l'ergot 13. Dans ce cas, les moyens de rappel 25 sont prévus entre le corps de guidage supplémentaire 28 et la base du corps de guidage 23 solidaire de la tête 8 du dispositif de serrage 1. Dans le cas où l'écrou 14 comporterait une embase de pression, les moyens de rappel 25 pourraient être supprimés.

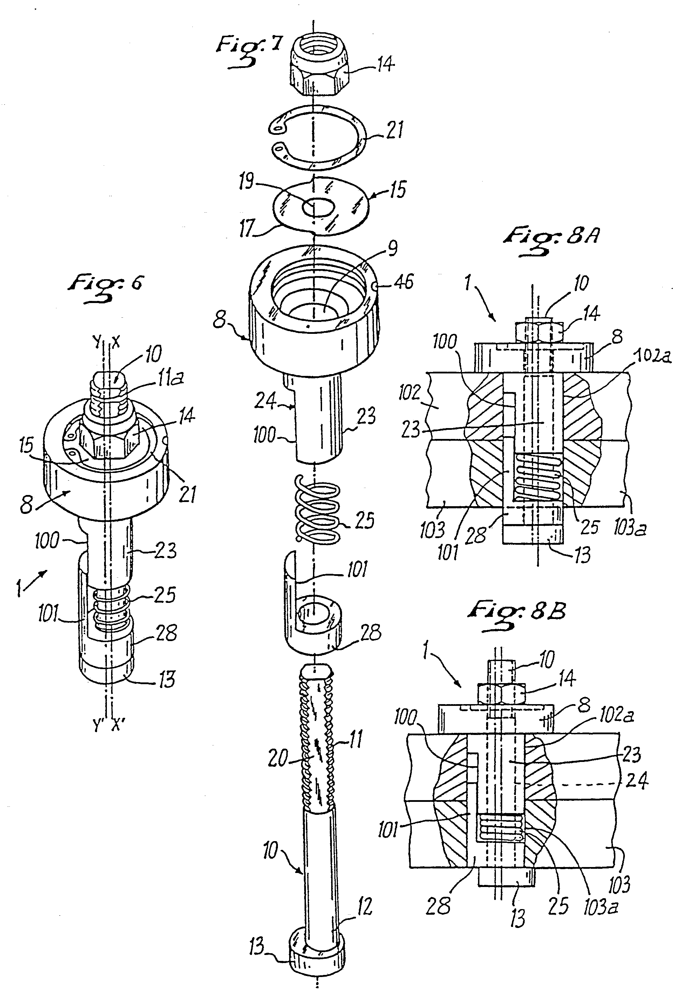

Dans la variante représentée sur les figures 6, 7 et 8A, 8B, pour guider le corps de guidage 23 et le corps de guidage supplémentaire 28 dans leurs déplacements relatifs parallèlement à leur axe commun X- X', et empêcher tout déplacement relatif desdits corps 23, 28 autour dudit axe, un méplat 100 est prévu sur le corps de guidage 23, tandis qu'une saillie 101, dont la forme correspond à celle du méplat 100, est prévue sur le corps de guidage supplémentaire 28. Il est bien évident que l'on pourrait tout aussi bien prévoir un méplat sur le corps de guidage supplémentaire 28 et une saillie de forme correspondante sur le corps de guidage 23.

On doit noter que, dans les exemples décrits ci-dessus, le corps de guidage 23 solidaire de la tête 8 est cylindrique de section circulaire. Dans ce cas, l'ergot 13 se présente sous la forme d'un disque solidaire de la tige 10, de diamètre au moins sensiblement égal au diamètre du corps et dont l'axe central est décalé par rapport à l'axe de la tige 10 d'une valeur au moins sensiblement égale au décalage entre l'axe longitudinal de la tête 8 et celui de son perçage 9.

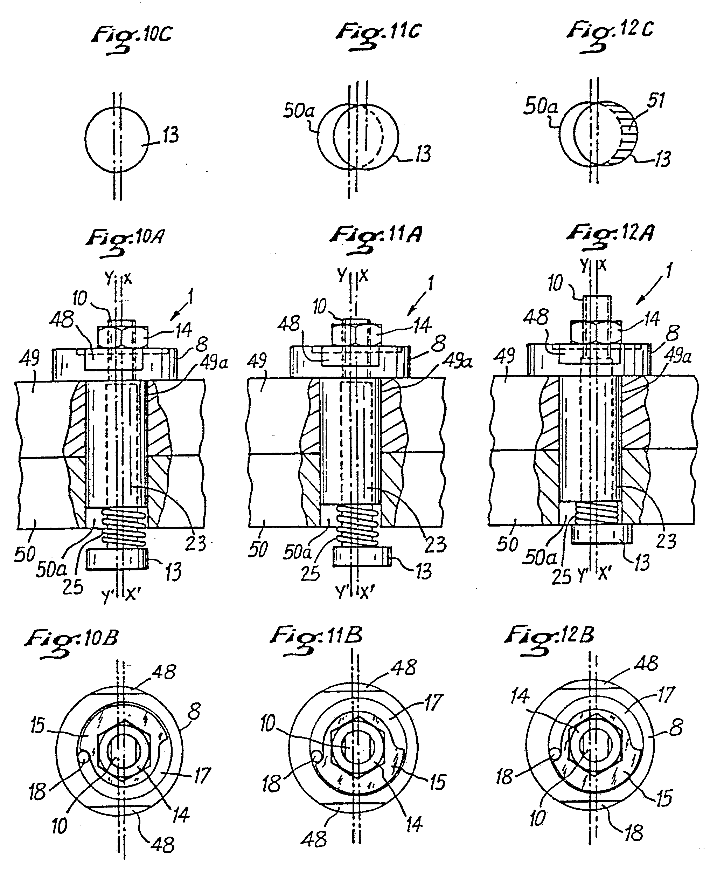

La figure 9 illustre un autre mode de réalisation du dispositif de serrage de l'invention qui est spécialement adapté pour serrer des plaques minces 29, 30 accolées.

Dans ce cas, le dispositif de serrage 1' comporte, de même, une tête 8' dans laquelle est susceptible de coulisser une tige 10' pouvant coopérer, à une extrémité, avec un écrou 14' et avec des moyens de blocage, comportant une came 15' et une butée 18', et qui est munie, à son autre extrémité, d'un ergot 13'.

En revanche, la tête 8' est, dans ce mode de réalisation particulier, pourvue d'un évidement central 31 dans lequel sont logés les moyens de rappel 25'. Ces derniers sont prévus entre le fond de l'évidement 31 et un corps de guidage 32 entourant la tige 10' au voisinage de l'ergot 13' et pouvant coulisser dans l'évidement 31.

On prévoit également un premier joint d'étanchéité 33 entre la base de la tête 8' et une des pièces 29 à assembler, ainsi qu'un second joint d'étanchéité 34, entourant la tige 10', disposé entre les deux parties 35, 36 constituant la tête 8'.

Il est bien évident que, dans les autres modes de réalisation, on peut prévoir, de même, des joints d'étanchéité similaires.

Le dispositif de serrage 1, 1' de l'invention est particulièrement adapté pour coopérer avec l'outil de serrage rotatif 37 schématiquement représenté sur les figures 13 et 14.

En se référant à la figure 13, l'outil de serrage 37 comporte un corps 38 dans lequel sont logés des moyens d'entraînement, tels qu'un moteur électrique (non représenté), reliés, par une liaison 39, à une alimentation électrique appropriée, et commandés, par exemple, par une détente 40, et une tête 41 présentant une douille 42 susceptible de coopérer avec l'écrou 14, 14' du dispositif de serrage 1, 1', la douille 42 étant entraînée en rotation par lesdits moyens d'entraînement par l'intermédiaire d'un arbre 43.

Selon l'invention, la tête 41 de l'outil et la tête 8, 8' du dispositif de serrrage comportent, respectivement, des premier et second moyens susceptibles de coopérer l'un avec l'autre de telle sorte que l'engagement de la tête 8, 8' du dispositif de serrage avec la tête 41 de l'outil garantit le blocage en rotation de la tête du dispositif de serrage.

En particulier, la tête 41 de l'outil présente un évidement 44 pour la réception d'au moins une partie, de forme correspondante, de la tête 8, 8' du dispositif de serrage.

L'évidement 44 et la partie de la tête du dispositif de serrage qui y est reçue peuvent présenter des formes cylindriques de section circulaire complémentaires. Dans ce cas, comme dans l'exemple représenté sur la figure 4, une saillie 45 est prévue sur la surface latérale interne de la tête 41 de l'outil délimitant l'évidement 44.

Cette saillie 45 est susceptible de coopérer avec une échancrure 46 prévue dans la tête 8 du dispositif de serrage 1 (figures 1 et 2) ou, éventuellement, avec une échancrure (non représentée) prévue dans la partie saillante 35 de la tête 8' dans le cas du mode de réalisation illustré par la figure 9.

Une autre possibilité, illustrée par les figures 10 à 12, consiste à prévoir des méplats 48, par exemple diamétralement opposés, dans la tête 8 du dispositif de serrage, la section de l'évidement dans la tête de l'outil ayant alors une forme correspondante.

Le fonctionnement du dispositif de serrage de l'invention sera expliqué ci-après en détail en référence aux figures 10 à 12.

Dans ce cas, le dispositif de serrage 1 est destiné à serrer deux pièces planes accolées 49, 50, et est réalisé comme dans l'exemple, illustré par les figures 1 à 4, décrit ci-dessus. Il est bien évident que le principe de fonctionnement reste le même pour tous les modes de réalisation représentés.

La figure 10A représente le dispositif de serrage 1 en position d'introduction dans les alésages 49a, 50a des pièces 49, 50 à assembler. Dans cette position, l'ergot 13 est en alignement avec le corps de guidage 23, et l'ensemble peut coulisser dans les alésages jusqu'à ce que la tête 8 prenne appui sur la face libre de la pièce 49. L'ergot 13 se trouve alors en dehors des alésages des pièces à assembler en alignement avec ceux-ci.

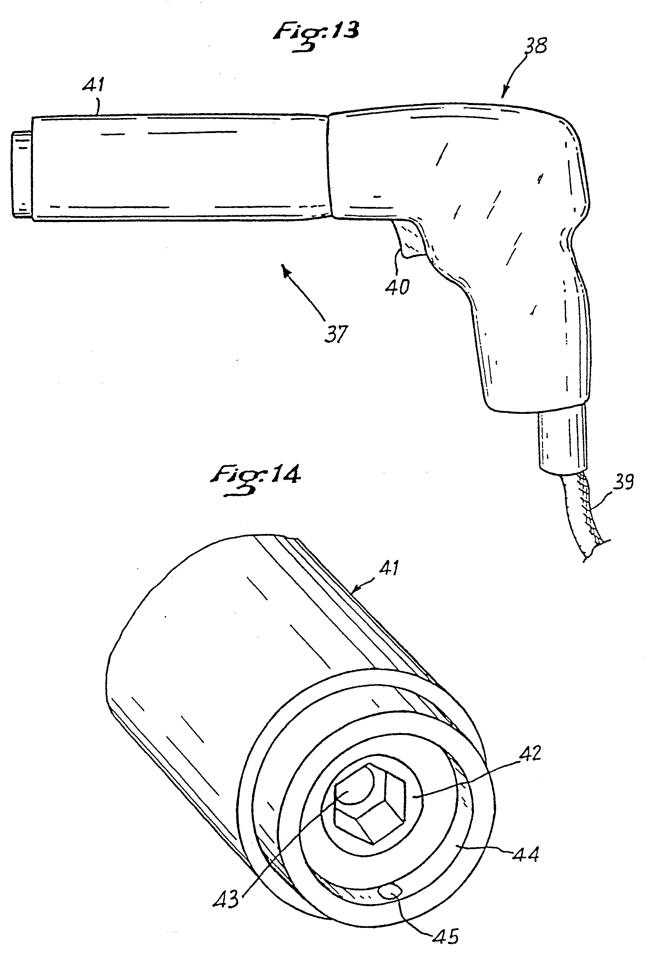

Une rotation de l'écrou 14 permet, dans un premier temps, de faire tourner la tige 10 d'un certain angle (de préférence environ 180°). Ainsi, l'ergot tourne, d'un même angle, jusqu'à ce qu'il se trouve dans sa position de saillie illustrée par les figures 11A et 11C, position dans laquelle il n'est plus en alignement avec les alésages 49a et 50a (cela est illustré schématiquement par la figure 11C).

Pendant ce mouvement de rotation de la tige 10, la came 15, solidaire en rotation de la tige, tourne également d'environ 180° (figure 11B), la fenêtre 17 se déplaçant, par rapport à la butée 18 solidaire de la tête 8, d'un même angle. Dans cette position de saillie de l'ergot, la came 15 est bloquée en rotation par la butée 18 de sorte que la tige 10 ne peut plus tourner. Ainsi, toute rotation supplémentaire de même sens que l'écrou 14 entraîne une translation axiale de la tige 10, à l'encontre des moyens de rappel 25, de façon à serrer les pièces 49, 50 entre la base de la tête 8 et l'ergot 13 (figure 12A). On notera que la partie hachurée 51 en forme de croissant de la figure 12C représente la surface active d'appui de l'ergot 13 à la périphérie de l'alésage 50a de la pièce 50.

L'écrou 14 peut entraîner la tige 10 en rotation grâce à la friction d'un frein (non représenté) dont il peut être muni, à la friction entre la base de l'écrou qui peut alors être élargie et la came, ou encore sous l'influence des moyens de rappel 25. Il est bien évident que toute combinaison de ces possibilités est également envisageable.

L'entraînement en rotation de l'écrou 14 peut être réalisé, de manière particulièrement avantageuse, par l'outil rotatif de serrage 37.

La tête 8 du dispositif de serrage étant introduite dans l'évidement 44 de la tête 41 de l'outil (la première étant bloquée en rotation dans l'évidement par les moyens coopérants décrits précédemment), l'écrou 14 vient se loger dans la douille 42 dont la rotation entraîne celle de l'écrou. La tige 10 pourrait également être entraînée en rotation par un outil de serrage 37 comportant une douille 42 débrayable, entraînée par friction par rapport à l'arbre 43 dans lequel s'encastre le méplat 20 de la tige 10. On peut alors utiliser un écrou 14, non équipé de frein.

La mise en œuvre du dispositif de serrage de l'invention est donc particulièrement simple et, en particulier, elle ne nécessite qu'un minimum d'opérations manuelles.

On précisera ci-après le fonctionnement du dispositif modifié représenté sur les figures 6 et 7. En se référant aux figures 8A et 8B, le dispositif de serrage 1 est destiné à serrer deux pièces planes accolées 102, 103.

La figure 8A représente le dispositif de serrage 1 en position d'introduction dans les alésages 102a, 103a des pièces 102, 103 à assembler. Dans cette position, l'ergot 13 est en alignement avec le corps de guidage 23 et le corps de guidage supplémentaire 28, et l'ensemble peut coulisser dans les alésages jusqu'à ce que la tête 8 prenne appui sur la face libre de la pièce 102. L'ergot 13 se trouve alors en dehors des alésages des pièces à assembler en alignement avec ceux-ci.

Une rotation de l'écrou 14 permet, dans un premier temps, de faire tourner la tige 10 d'un certain angle (de préférence environ 180°). Ainsi, l'ergot tourne, d'un même angle, jusqu'à ce qu'il se trouve dans sa position de saillie, position dans laquelle il n'est plus en alignement avec les alésages 102a, 103a.

Pendant ce mouvement de rotation de la tige 10, la came 15, solidaire en rotation de la tige, tourne également d'environ 180°, la fenêtre 17 se déplaçant, par rapport à la butée solidaire de la tête 8, d'un même angle. Dans cette position de saillie de l'ergot, la came 15 est bloquée en rotation par ladite butée de sorte que la tige 10 ne peut tourner. Ainsi, toute rotation supplémentaire de même sens de l'écrou 14 entraîne une translation axiale de la tige 10, à l'encontre des moyens de rappel 25, de façon à serrer les pièces 102, 103 entre la base de la tête 8 et l'ergot 13 (figure 8B).

Pendant cette opération de serrage, tout déplacement relatif du corps de guidage 23 et du corps de guidage supplémentaire 28 est empêché grâce au méplat 100 et à la saillie 101 coopérants; ces derniers permettant en même temps de guider le corps de guidage 23 et le corps de guidage supplémentaire 28 dans leur déplacement relatif parallèlement à leur axe commun.

L'écrou 14 peut entraîner la tige 10 en rotation grâce à la friction d'un frein (non représenté) dont il peut être muni, à la friction entre la base de l'écrou qui peut alors être élargie et la came, ou encore sous l'influence des moyens de rappel 25. Il est bien évident que toute combinaison de ces possibilités est également envisageable.

On notera enfin que l'entraînement en rotation de l'écrou 14 peut être réalisé également dans ce cas, de manière particulièrement avantageuse, par l'outil rotatif de serrage 37.

## Revendications

1. Dispositif de serrage d'au moins deux pièces accolées à assembler, destiné à être introduit dans au moins deux alésages alignés l'un par rapport à l'autre prévus, respectivement, dans lesdites pièces, du type comprenant:

— une tête susceptible de venir en appui sur une face d'une pièce et qui est munie d'un perçage dont l'axe longitudinal est décalé par rapport à l'axe longitudinal de la tête,

— le perçage étant susceptible de recevoir de façon coulissante une tige, filetée au moins à sa partie d'extrémité voisine de la tête, et dont l'autre extrémité comporte un ergot, et

— un écrou destiné à coopérer avec la partie filetée de la tige de sorte que, après introduction du dispositif de serrage dans les alésages, introduction pendant laquelle l'ergot est en position d'alignement par rapport aux alésages, et après rotation de la tige, et par conséquent de l'ergot, jusqu'à une position de saillie de ce dernier par rapport aux alésages, la rotation de l'écrou permet de serrer les pièces à assembler entre la tête et l'ergot, caractérisé en ce que ledit dispositif de serrage (1, 1') comprend des moyens de blocage comportant un premier élément (18, 18') solidaire de la tête (8, 8') et un second élément (15, 15') solidaire en rotation de la tige (10, 10') et susceptible d'être entraîné en rotation par l'écrou (14, 14') en même temps que la tige (10, 10') entre ladite position d'alignement et ladite position de saillie, position de saillie dans laquelle lesdits premier et second éléments de blocage coopèrent pour bloquer la rotation de la tige, de sorte que toute rotation supplémentaire de même sens de l'écrou entraîne une translation axiale de la tige dans le sens du serrage des pièces.

2. Dispositif selon la revendication 1, caractérisé en ce que le second élément de blocage comprend une came (15), de forme générale circulaire, logée dans un évidement (16) prévu dans ladite tête (8), et munie d'une fenêtre arquée (17) dans laquelle est introduite une butée (18) constituant le premier élément de blocage, la came (15) étant percée d'un trou (19) pour l'introduction de la tige filetée (10), la section de la tige (10) et celle dudit trou (19) étant adaptées de telle sorte que toute rotation de la tige entraîne une rotation concomitante de la came.

3. Dispositif selon la revendication 2, caractérisé en ce que la tige (10) et le trou de came (19) présentent des sections oblongues correspondantes.

4. Dispositif selon la revendication 2 ou la revendication 3, caractérisé en ce que la fenêtre (17) de la came s'étend à la périphérie de celle-ci sur environ la moitié de sa circonférence.

5. Dispositif selon l'une quelconque des revendications 1 à 4, caractérisé en ce qu'il comporte de plus un corps de guidage (23) dans lesdits alésages, solidaire de ladite tête (8) et muni d'un perçage (24), en alignement avec le perçage (9) de la tête (8), pour recevoir de façon coulissante ladite tige (10).

6. Dispositif selon la revendication 5, caractérisé en ce qu'on prévoit des moyens de rappel (25) entre l'ergot (13) et la base du corps (23), à l'encontre desquels s'effectue la translation axiale de la tige (10).

7. Dispositif selon la revendication 5, caractérisé en ce qu'on prévoit un corps de guidage supplémentaire (28) monté sur ladite tige (10) au voisinage de l'ergot (13), et en ce que des moyens de rappel (25) sont prévus entre le corps de guidage supplémentaire (28) et la base du corps de guidage (23) solidaire de la tête, à l'encontre desquels s'effectue la translation axiale de la tige (10).

8. Dispositif selon la revendication 7, caractérisé en ce qu'il comprend des moynes (100, 101) pour guider le corps de guidage (23) et le corps de guidage supplémentaire (28) dans leurs déplacements relatifs parallèlement à leur axe commun (X-X') et empêcher tout déplacement relatif desdits corps (23, 28) autour dudit axe (X-X').

9. Dispositif selon la revendication 8, caractérisé en ce que lesdits moyens de guidage comprennent un premier élément d'indexage (100) sur le corps de guidage (23), respectivement sur le corps de guidage supplémentaire (28), et un second élément d'indexage (101) sur le corps de guidage supplémentaire (28), respectivement sur le corps de guidage (23), lesdits premier et second éléments d'indexage étant susceptibles de coopérer pour maintenir alignés, l'un par rapport à l'autre, le corps de guidage (23) et le corps de guidage supplémentaire (28).

10. Dispositif selon la revendication 9, caractérisé en ce que le premier élément d'indexage est un méplat (100) prévu sur le corps de guidage (23), respectivement sur le corps de guidage supplémentaire (28), et le second élément d'indexage est une saillie (101), dont la forme correspond à celle dudit méplat, sur le corps de guidage supplémentaire (28), respectivement sur le corps de guidage (23).

11. Dispositif selon l'une quelconque des revendications 5 à 10, caractérisé en ce que ledit corps de guidage (23) est cylindrique de section circulaire, et en ce que l'ergot (13) se présente sous la forme d'un disque solidaire de la tige (10), de diamètre au moins sensiblement égal au diamètre du corps et dont l'axe central est décalé par rapport à l'axe de la tige d'une valeur au moins sensiblement égale au décalage entre l'axe longitudinal de la tête et celui de son perçage.

12. Dispositif selon l'une quelconque des revendications 1 à 4, caractérisé en ce que ladite tête (8') est pourvue d'un évidement central (31) dans lequel sont logés des moyens de rappel (25), à l'encontre desquels s'effectue la translation axiale de la tige (10').

13. Dispositif selon la revendication 12, caractérisé en ce que lesdits moyens de rappel (25) sont prévus entre le fond dudit évidement (31) et un corps de guidage (32) entourant la tige (10') au voisinage de l'ergot (13') et pouvant coulisser dans l'évidement (31).

14. Ensemble de serrage, du type comprenant un outil de serrage, et au moins un dispositif de serrage d'au moins deux pièces accolées à assembler, destiné à être introduit dans au moins deux alésages alignés l'un par rapport à l'autre prévus, respectivement, dans lesdites pièces, le dispositif de serrage comprenant:

— une tête susceptible de venir en appui sur une face d'une pièce et qui est munie d'un perçage dont l'axe longitudinal est décalé par rapport à l'axe longitudinal de la tête,

— le perçage étant susceptible de recevoir de façon coulissante une tige, filetée au moins à sa partie d'extrémité voisine de la tête, et dont l'autre extrémité comporte un ergot, et

— un écrou destiné à coopérer avec la partie filetée de la tige de sorte que, après introduction du dispositif de serrage dans les alésages, introduction pendant laquelle l'ergot est en position d'alignement par rapport aux alésages, et après rotation de la tige, et par conséquent de l'ergot, jusqu'à une position de saillie de ce dernier par rapport aux alésages, la rotation de l'écrou permet de serrer les pièces à assembler entre la tête et l'ergot,

et l'outil de serrage comprenant:

— une tête présentant une douille susceptible de coopérer avec ledit écrou, et

— des moyens d'entraînement en rotation de la douille, caractérisés en ce que la tête (41) de l'outil et la tête (8, 8') du dispositif de serrage comportent, respectivement, des premier (45) et second (46, 48) moyens susceptibles de coopérer l'un avec l'autre de telle sorte que l'engagement de la tête (8, 8') du dispositif de serrage avec la tête (41) de l'outil garantit le blocage en rotation de la tête du dispositif de serrage.

15. Ensemble selon la revendication 4, caractérisé en ce que la tête (41) de l'outil présente un évidement (44) pour la réception d'au moins une partie, de forme correspondante, de la tête (8, 8') du dispositif de serrage.

16. Ensemble selon la revendication 15, caractérisé en ce que ledit évidement (44) et ladite partie de la tête (8, 8') du dispositif de serrage présentent des formes cylindriques de section circulaire complémentaires, et en ce que lesdits premier et second moyens comportent, respectivement, au moins une saillie (45) prévue sur la surface latérale interne de la tête de l'outil, respectivement sur la surface latérale externe de la tête du dispositif de serrage, susceptible de coopérer avec une échancrure (46) prévue dans la tête du dispositif de serrage, respectivement dans la tête de l'outil.

17. Ensemble selon l'une quelconque des revendications 14 à 16, caractérisé en ce qu'il comprend un dispositif de serrage selon l'une quelconque des revendications 1 à 13.

**Patentansprüche**

1. Vorrichtung zum Zusammenklemmen von mindestens zwei Seite an Seite zu verbindenden Teilen, die dazu bestimmt ist, in koaxiale Durchsteckbohrungen, welche diese Teile durchsetzen, eingefügt zu werden, und die aufweist:

— einen Kopf, der an einer Oberfläche eines dieser Teile zur Anlage kommt und eine Bohrung hat, deren Längsachse bezüglich der Längsachse des Kopfes versetzt ist,

— einen wenigstens an seinem dem Kopf benachbarten Ende mit einem Gewinde versehenen Bolzen, der in die Bohrung eingeschoben werden kann und dessen anderes Ende einen Nocken trägt, und

— eine Mutter, die mit dem Gewindeabschnitt des Bolzens in der Weise zusammenwirkt, dass nach Einführen der Klemmvorrichtung in die Durchsteckbohrungen, wobei der Nocken bezüglich der Durchsteckbohrungen eine fluchtende Stellung einnimmt, und nach Verdrehen des Bolzens und des Nockens, wonach der Nocken bezüglich der Durchsteckbohrungen eine übergreifende Stellung einnimmt, die zu verbindenden Teile durch Drehen der Mutter zwischen dem Kopf und dem Nocken eingeklemmt werden, dadurch gekennzeichnet, dass die Klemmvorrichtung (1, 1') Blockiermittel aufweist mit einem ersten, an dem Kopf (8, 8') befestigten Element (18, 18') und mit einem zweiten, drehfest mit dem Bolzen (19, 19') verbundenen Element (15, 15'), das durch Drehen der Mutter (14, 14') gleichzeitig mit dem Bolzen (10, 10') zwischen der fluchtenden Stellung und der übergreifenden Stellung verdreht wird, wobei in der übergreifenden Stellung das erste und zweite Blockierelement zusammenwirken und die Drehbewegung des Bolzens derart blokieren, dass jede weitere Drehbewegung der Mutter im gleichen Drehsinne eine axiale Translationsbewegung des Bolzens im Sinne einer Klemmung der Teile herbeiführt.

2. Vorrichtung nach Anspruch 1, dadurch gekennzeichnet, dass das zweite Blockierelement eine im wesentlichen kreisförmige Kurvenscheibe (15) ist, die in einer Aussparung (16) des Kopfes (8) liegt und ein Bogenfenster (17) hat, in welches ein das erste Blockierelement bildender Anschlag (18) eingefügt ist und dass die Kurvenscheibe (15) ein Loch (19) zum Einfügen des Gewindebolzens (10) hat, wobei die Querschnitte des Bolzens (10) und des Lochs (19) einander derart angepasst sind, dass eine Drehbewegung des Bolzens eine gleichzeitige Drehbewegung der Kurvenscheibe herbeiführt.

3. Vorrichtung nach Anspruch 2, dadurch gekennzeichnet, dass der Bolzen (10) und das Loch (19) der Kurvenscheibe einander entsprechende längliche Querschnitte haben.

4. Vorrichtung nach Anspruch 2 oder Anspruch 3, dadurch gekennzeichnet, dass sich das Bogenfenster (17) der Kurvenscheibe am Umfang derselben über einen Winkel von etwa 180° erstreckt.

5. Vorrichtung nach einem der Ansprüche 1 bis 4, dadurch gekennzeichnet, dass sie in den Durchsteckbohrungen einen mit dem Kopf (8) fest verbundenen Führungsansatz (23) aufweist, der eine mit der Bohrung (9) des Kopfes (8) fluchtende Bohrung (24) hat, welche den Bolzen (10) gleitend aufnimmt.

6. Vorrichtung nach Anspruch 5, dadurch gekennzeichnet, dass zwischen dem Nocken (13) und der Stirnfläche des Führungsansatzes (23) Rückstellmittel (25) vorgesehen sind, welche der axialen Translationsbewegung des Bolzens (10) entgegenwirken.

7. Vorrichtung nach Anspruch 5, dadurch gekennzeichnet, dass in der Nähe des Nockens (13) ein zusätzlicher Führungskörper (28) auf den Bolzen (10) montiert ist, dass die Rückstellmittel (25) zwischen dem zusätzlichen Führungskörper (28) und der Stirnfläche des mit dem Kopf fest verbundenen Führungsansatzes (23) vorgesehen sind und dass diese Rückstellmittel der axialen Translationsbewegung des Bolzens (10) entgegenwirken.

8. Vorrichtung nach Anspruch 7, dadurch gekennzeichnet, dass Führungsmittel (100, 101) vorgesehen sind, um den Führungsansatz (23) und den zusätzlichen Führungskörper (28) bei ihrer Relativbewegung parallel zu ihrer gemeinsamen Achse (X-X') zu führen und jede relative Drehbewegung dieser Körper um diese Achse (X-X') zu verhindern.

9. Vorrichtung nach Anspruch 8, dadurch gekennzeichnet, dass die Führungsmittel ein erstes Indexierungselement (100) an dem Führungsansatz (23) bzw. dem zusätzlichen Führungskörper (28) sowie ein zweites Indexierungselement (101) an dem zusätzlichen Führungskörper (28) bzw. dem Führungsansatz (23) aufweisen, welche beide Indexierungselemente derart zusammenwirken, dass die gegenseitige Winkelausrichtung des Führungsansatzes (23) und des zusätzlichen Führungskörpers (28) aufrechterhalten bleibt.

10. Vorrichtung nach Anspruch 9, dadurch gekennzeichnet, dass das erste Indexierungselement eine Abflachung (100) am Führungsansatz (23) bzw. am zusätzlichen Führungskörper (28) ist und dass das zweite Indexierungselement ein Vorsprung (101) am zusätzlichen Führungskörper (28) bzw. am Führungsansatz (23) ist, wobei die Form des Vorsprungs der Form der Abflachung entspricht.

11. Vorrichtung nach einem der Ansprüche 5 bis 10, dadurch gekennzeichnet, dass der Führungsansatz (23) zylindrisch ist und einen kreisförmigen Querschnitt hat und dass der Nocken (13) sich als mit dem Bolzen (10) fest verbundene Scheibe darstellt, deren Durchmesser mindestens annähernd dem Durchmesser des Führungsansatzes entspricht und deren Mittelachse gegenüber der Mittelachse des Bolzens versetzt ist, wobei der Achsabstand mindestens annähernd gleich der Versetzung zwischen der Mittelachse (Y') des Kopfes und derjenigen (X') seiner Bohrung ist.

12. Vorrichtung nach einem der Ansprüche 1 bis 4, dadurch gekennzeichnet, dass der Kopf (8') mit einer zentralen Ausnehmung (31) versehen ist, in welcher Rückstellmittel (25) angeordnet sind, wobei die axiale Translationsbewegung des Bolzens (10') diesen entgegenwirkt.

13. Vorrichtung nach Anspruch 12, dadurch gekennzeichnet, dass die Rückstellmittel (25) zwischen dem Boden der Ausnehmung (31) und einem Führungskörper (32) angeordnet sind, der den Bolzen (10') in der Nähe des Nockens (13') umfängt und in der Ausnehmung (31) gleiten kann.

14. Klemmeinheit mit einem Werkzeug und wenigstens einer Klemmvorrichtung zum Zusammenklemmen von mindestens zwei Seite an Seite zu verbindenden Teilen, die dazu bestimmt ist, in koaxiale Durchsteckbohrungen, welche diese Teile durchsetzen, eingeführt zu werden, wobei die Klemmvorrichtung aufweist:
— einen Kopf, der an einer Oberfläche eines dieser Teile zur Anlage kommt und eine Bohrung hat, deren Längsachse bezüglich der Längsachse des Kopfes versetzt ist,
— einen wenigstens an seinem dem Kopf benachbarten Ende mit einem Gewinde versehenen Bolzen, der in die Bohrung eingeschoben werden kann und dessen anderes Ende einen Nocken trägt, und
— eine Mutter, die mit dem Gewindeabschnitt des Bolzens in der Weise zusammenwirkt, dass nach Einführen der Klemmvorrichtung in die Durchsteckbohrungen, wobei der Nocken bezüglich der Durchsteckbohrungen eine fluchtende Stellung einnimmt, und nach Verdrehen des Bolzens und des Nockens, wonach der Nocken bezüglich der Durchsteckbohrungen eine übergreifende Stellung einnimmt, die zu verbindenden Teile durch Drehen der Mutter zwischen dem Kopf und dem Nocken eingeklemmt werden, und wobei das Werkzeug umfasst:
— einen Kopf, der eine mit der Mutter zusammenwirkende Stecknuss enthält, und
— Drehantriebsmittel für die Stecknuss, dadurch gekennzeichnet, dass der Kopf (41) des Werkzeugs und der Kopf (8, 8') der Klemmvorrichtung erste (45) bzw. zweite (46, 48) Mittel aufweisen, die derart zusammenwirken, dass das

Zusammenfügen des Kopfes (8, 8') der Klemmvorrichtung und des Kopfes (41) des Werkzeugs die Drehblockierung des Kopfes der Klemmvorrichtung garantiert.

15. Klemmeinheit nach Anspruch 14, dadurch gekennzeichnet, dass der Kopf (41) des Werkzeugs eine Aussparung (44) zur Aufnahme wenigstens eines entsprechend geformten Teils des Kopfes (8, 8') der Klemmvorrichtung aufweist.

16. Klemmeinheit nach Anspruch 15, dadurch gekennzeichnet, dass die Aussparung (44) und der Teil des Kopfes (8, 8') der Klemmvorrichtung zusammenpassende zylindrische Formen mit kreisförmigem Querschnitt aufweisen und dass die ersten und zweiten Mittel aus einem Vorsprung (45) an der seitlichen Innenfläche des Werkzeugkopfes bzw. an der seitlichen Aussenfläche des Klemmvorrichtungskopfes sowie aus einer Kerbe (46) am Klemmvorrichtungskopf bzw. am Werkzeugkopf bestehen.

17. Klemmeinheit nach einem der Ansprüche 14 bis 16, dadurch gekennzeichnet, dass sie eine Klemmvorrichtung nach einem der Ansprüche 1 bis 13 umfasst.

## Claims

1. Device to clamp at least two pieces side by side to be joined, intended to be inserted into at least two bores aligned one with respect to the other provided, respectively, in said pieces, of the type comprising:
   — a head capable of resting on one face of one piece and which is provided with a hole, the longitudinal axis of which is shifted with respect to the longitudinal axis of the head,
   — the hole being capable of slidably receiving a rod, threaded at least at its end portion adjacent to the head, the other end which comprising a peg, and
   — a nut intended to cooperate with the threaded portion of the rod so that, after insertion of the clamping device into the bores, during which the peg is aligned with respect to the bores, and after rotation of the rod, and hence of the peg, up to a position wherein the latter projects with respect to the bores, rotation of the nut makes it possible to clamp the pieces to be jointed between the head and the peg, characterized in that said clamping device (1, 1') comprises blocking means comprising a first member (18, 18') fast with the head (8, 8') and a second member (15, 15') rotating with the rod (10, 10') and capable of being rotated by the nut (14, 14') together with the rod (10, 10') between said aligned position and said projected position, projected position wherein said first and second blocking members cooperate to block the rotation of the rod, so that any further rotation in the same direction of the nut causes an axial translation of the rod in the direction of clamping of the pieces.

2. Device according to claim 1, characterized in that the second blocking member comprises a generally circular cam (15), housed in a recess (16) provided in said head (8) and having an arcuate opening (17) wherein is inserted a stop (18) forming the first blocking member, the cam (15) having a hole (19) for insertion of the threaded rod (10), the section of the rod (10) and that of the hole (19) being so adapted that any rotation of the rod causes an attendant rotation of the cam.

3. Device according to claim 2, characterized in that the rod (10) and the cam hole (19) have corresponding oblong sections.

4. Device according to claim 2 or claim 3, characterized in that the cam opening (17) extends at the periphery thereof on about half of its circumference.

5. Device according to any one of claims 1 to 4, characterized in that it further comprises a guiding body (23) in said bores, fast with said head (8) and provided with a hole (24), aligned with the hole (9) of the head (8), for slidably receiving said rod (10).

6. Device according to claim 5, characterized in that return means (25) are provided between the peg (13) and the body base (23), against which occurs the axial translation of the rod (10).

7. Device according to claim 5, characterized in that an additional guiding body (28) is mounted on said rod (10) adjacent to the peg (13), and in that return means (25) are provided between the additional guiding body (28) and the base of the guiding body (23) fast with the head, against which occurs the axial translation of the rod (10).

8. Device according to claim 7, characterized in that it comprises means (100, 101) for guiding the guiding body (23) and the additional guiding body (28) during their relative movements parallel to their common axis (X-X') and avoiding any relative movement of said bodies (23, 28) about said axis (X-X').

9. Device according to claim 8, characterized in that said guiding means comprise a first indexing member (100) on the guiding body (23), respectively on the additional guiding body (28), and a second indexing member (101) on the additional guiding body (28), respectively on the guiding body (23), said first and second indexing members being capable of cooperating one with the other to keep aligned, one with respect to the other, the guiding body (23) and the additional guiding body (28).

10. Device according to claim 9, characterized in that the first indexing member is a flat part (100) on the guiding body (23), respectively on the additional guiding body (28), and the second indexing member is a projection (101), the shape of which corresponds to that of said flat part, on the additional guiding body (28), respectively on the guiding body (23).

11. Device according to any one of claims 5 to 10, characterized in that said guiding body (23) is cylindrical with a circular section, and in that the peg (13) is a disc fast with the rod (10), having a diameter at least substantially equal to the diameter of the body and the central axis of which is shifted with respect to the axis of the rod by a magnitude at least substantially equal to the shift between the longitudinal axis of the head and that of its hole.

12. Device according to any one of claims 1 to 4, characterized in that said head (8') is provided with a central recess (31) in which are housed return means (25), against which occurs the axial translation of the rod (10').

13. Device according to claim 12, characterized in that said return means (25) are accommodated between the bottom of said recess (31) and a guiding body (32) surrounding the rod (10') near the peg (13') and slidable in the recess (31).

14. Clamping unit, of the type comprising a clamping tool, and at least one device to clamp at least two pieces side by side to be joined, intended to be inserted into at least two bores aligned one with respect to the other provided, respectively, in said pieces, the clamping device comprising:

— a head capable of resting on one face of one piece and which is provided with a hole, the longitudinal axis of which is shifted with respect to the longitudinal axis of the head,

— the hole being capable of slidably receiving a rod, threaded at least at its end portion adjacent to the head, the other end of which comprising a peg, and

— a nut intended to cooperate with the threaded portion of the rod so that, after insertion of the clamping device into the bores, during which the peg is aligned with respect to the bores, and after rotation of the rod, and hence of the peg, up to a position wherein the latter projects with respect to the bores, rotation of the nut makes it possible to clamp the pieces to be jointed between the head and the peg, and the clamping tool comprising:

— a head having a socket capable of cooperating with said nut, and

— means for rotating the socket, characterized in that the head (41) of the tool and the head (8, 8') of the clamping device comprise, respectively, first (45) and second (46, 48) means capable of cooperating one with the other so that engagement of the head (8, 8') of the clamping device with the head (41) of the tool insures that the head of the clamping device is prevented to rotate.

15. Unit according to claim 14, characterized in that the head (41) of the tool has a recess (44) for receiving at least a portion of corresponding shape, of the head (8, 8') of the clamping device.

16. Unit according to claim 15, characterized in that said recess (44) and said portion of the head (8, 8') of the clamping device have complementary cylindrical shapes with circular section, and in that said first and second means comprise, respectively, at least a projection (45) provided on the internal lateral surface of the head of the tool, respectively on the external lateral surface of the head of the clamping device, capable of cooperating with a notch (46) provided in the head of the clamping device, respectively in the head of the tool.

17. Unit according to any one of claims 14 to 16, characterized in that it comprises a clamping device according to any one of claims 1 to 13.

Fig. 1

Fig. 2

*Fig. 3*

*Fig. 4*

*Fig. 9*

*Fig. 5A*

*Fig. 5B*

Fig. 7

14

21

19

15

17

Fig. 6

Fig. 8A

Y X

10

11a

14

15

8

100

21

23

1

25

101

28

13

Y' X'

9

46

8

24

23

100

25

101

28

20

11

10

12

13

1

10

14

100

8

102a

102

23

103

28

101

13

25

103a

Fig. 8B

1

10

14

100

8

102a

23

24

101

28

13

25

103a

103

15

Fig.10C

Fig.11C

Fig.12C

Fig.10A

Fig.11A

Fig.12A

Fig.10B

Fig.11B

Fig.12B

*Fig.13*

*Fig.14*